# EUROPEAN PATENT APPLICATION

(11) **EP 1 108 354 A1**
(43) Date of publication of application: **20.06.2001**
(21) Application number: 00204259.6
(22) Date of filing: 30.11.2000
(51) Int. Cl.: A01G 9/02

(54) **Systems comprising a plate-shaped support that can be positioned in a reservoir**

(30) Priority: 14.12.1999 NL 1013838
(71) Applicant: SYNPRODO PLANTPAK B.V., 6603 BM Wijchen (NL)
(72) Inventor: Mortko, Stanislaw Adam Julian, 5144 GH Waalwijk (NL)
(74) Representative: Veldman-Dijkers, Cornelia G.C., Ir.

(57) **Abstract**

A system comprising a plate-shaped support for bulbous plants that can be positioned in a reservoir, which support is provided with a number of openings arranged in rows and columns, whilst the reservoir includes a number of ribs supporting said plate-shaped support, wherein said ribs extend at an acute angle to said rows and columns.

A system comprising a plate-shaped support for bulbous plants that can be positioned in a reservoir, wherein the support can be detachably connected to the reservoir by means of a snap connection.

## Description

The invention relates to a system comprising a plate-shaped support for bulbous plants that can be positioned in a reservoir, which support is provided with a number of openings arranged in rows and columns, whilst the reservoir includes a number of ribs supporting said plate-shaped support.

The invention furthermore relates to a system comprising a plate-shaped support for bulbous plants that can be positioned in a reservoir, which support is provided with a number of openings arranged in rows and columns.

The term bulbous plants as used herein is understood to refer to plants comprising a bulb, a tuber or a root ball.

In a similar system for forcing bulbs in water, which is known from Dutch patent NL-C-1011346, a number of supports are positioned one beside another in a reservoir. Each support is provided with a number of openings arranged in rows and columns, in which openings the bulbous plants can be clamped down.

The reservoir includes a number of ribs that support the plate-shaped support, which ribs extend parallel to the rows in which the openings are arranged. The ribs function to support the plate-shaped support and to enhance the stiffness of the system. The ribs abut against the underside of the support, between the openings that are present therein. When supports having more or fewer rows of openings are used, the position of the ribs must be adapted accordingly so as to prevent the openings in the support being closed off by the ribs.

The object of the invention is to provide a system wherein the reservoir with the ribs present therein is suitable for accommodating supports comprising different numbers of rows and/or columns.

This objective is accomplished with the system according to the invention in that said ribs extend at an acute angle to said rows and columns.

Since the ribs include an acute angle both with the rows and with the columns comprising the openings, the risk that the ribs will completely close off an opening in the bottom side of the support is fairly remote. This makes the reservoir suitable for use with supports which exhibit varying dimensions between the various openings.

The ribs provide an adequate support for the support, as a result of which the openings that are present in the support are all spaced from the water to be introduced into the reservoir by the same distance. In addition, the provision of ribs in the reservoir has the advantage that the support need not be fitted with spacers. As a result of this, different supports suitable for varying types of bulbous plants, which are all capable of being connected to one and the same type of reservoir, can be produced in a relatively inexpensive manner. This makes it possible to adapt the system for growing or forcing varying bulbous plants in a simple and inexpensive manner.

In addition, since the ribs extend at an acute angle, it is possible to produce the support as a product which has been deep-drawn from plastic material, wherein the wall portions present between the openings consist of a folded sheet material. Such wall portions are open to the bottom side. If the ribs were to extend parallel to a row with such a support, there would be a risk of the wall portions moving down over said ribs, as a consequence of which the intended supporting function of the ribs would not be realised. By having the ribs include an acute angle with the rows and the columns, it is possible to provide a desired support for said support, also when a support that has been deep-drawn from plastic material is used.

With a system of this kind, the reservoir is filled with stagnant water or with running water, to which nutrients have been added. This causes the bulbous plants to grow. Once the plants have reached the desired size, they are pulled out of the openings. In order to prevent the support being pulled out of the reservoir along with the bulbous plants, the prior art system employs a locking plate that is connected to the ribs. Said locking plate cannot be connected to the ribs until the support has been positioned in the reservoir, and it needs to be removed prior to the removal of the support.

As a consequence, the number of operations to be carried out for detachably connecting the support to the reservoir is relatively large.

The object of the invention is furthermore to avoid the above drawbacks of the prior art system.

This objective is accomplished with the system according to the invention in that the support can be detachably connected to the reservoir by means of a snap connection.

A snap connection, which preferably extends along the entire circumference of the support, makes it possible to effect a strong yet easily detachable connection between the support and the reservoir.

Since the support is detachably connected to the reservoir, it is possible to realise a clamping engagement between the support and the reservoir, such that when a bulbous plant is pulled out of the support, the support will remain connected to the reservoir. Since water is present in the reservoir, the reservoir and the support connected thereto will not be moved when a bulbous plant is being pulled out of the support. Also when only a few bulbous plants remain in the support, the weight of the water-filled reservoir will make it possible to pull the bulbous plant out of the support without any problems.

Since the support is detachably connected to the reservoir, the support can be removed from the reservoir once the bulbous plants have been removed so as to make it possible to clean the support as well as the reservoir. Once cleaned, the support and the reservoir can be connected together again, after which new bulbous plants can be placed into the support.

Instead of using water, it is also possible to use another growth medium, such as earth or rock wool, in the reservoir.

One embodiment of the system according to the invention is characterized in that the openings are substantially rectangular, and preferably substantially square.

This form of the openings makes it readily possible to place the bulbous plants in the support. The systems that have been known so far comprise substantially circular openings, which form conforms less well to the shape of the bulbs.

The invention will now be explained in more detail with reference to the drawings, wherein:
Figures 1A, 1B and 1C are a top plan view and side views, respectively, of a support of a system according to the invention;
Figures 2A, 2B and 2C are a top plan view and side views, respectively, of a reservoir of a system according to the invention;
Figures 3A, 3B and 3C are a top plan view and side views, respectively, of the support that is shown in Figures 1A-1C, which is connected to the reservoir that is shown in Figures 2A-2C;
Figures 4A-H show various snap connections of systems according to the invention;
Figures 5A, 5B and 5C are a top plan view and side views, respectively, of another embodiment of a support of the system according to the invention;
Figures 6A, 6B and 6C are a top plan view and side views, respectively, of another embodiment of a reservoir of the system according to the invention;
Figures 7A, 7B and 7C are a top plan view and side views, respectively, of the support that is shown in Figures 5A-5C, which is connected to the reservoir that is shown in Figures 6A-6C.

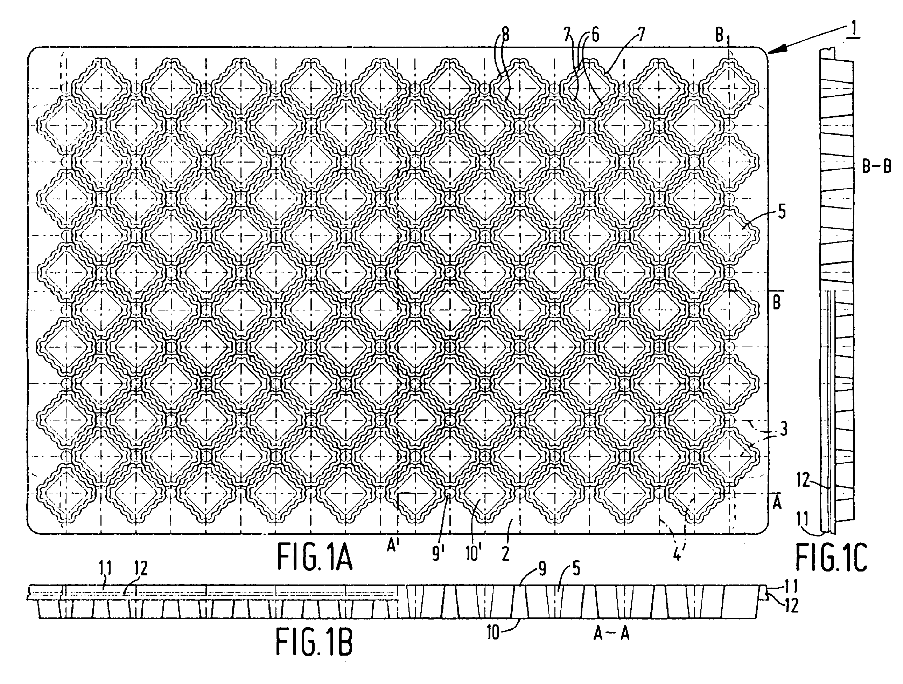

Figures 1A, 1B and 1C show in top plan view and side view, respectively, a support 1 of a water forcing system according to the invention. Support 1 comprises a plate 2 formed of plastic material, in which a number of openings 5 arranged in rows 3 and columns 4 are present. Openings 5 are bounded by two parallel walls 6 and two walls 7 extending transversely thereto. Walls 6, 7 have substantially the same length, so that each opening 5 is substantially square. Walls 6, 7 include ribs 8, which function to clamp down the bulbous plant properly in opening 5.

Openings 5 extend conically from an upper side 9 of support 1 to the underside 10. As a result, the bulbous plants cannot fall through openings 5, whilst in addition this shape enables easy removal of the formed product from the mould when forming the support 1 from plastic material. Air passages 9' are present in upper side 9, whilst water passages 10' are present in underside 10.

Support 1 is provided with a flange 11 extending from the upper side 9 to the underside 10 substantially along its entire circumference, which flange 11 includes a corrugation 12 facing towards the opening 5.

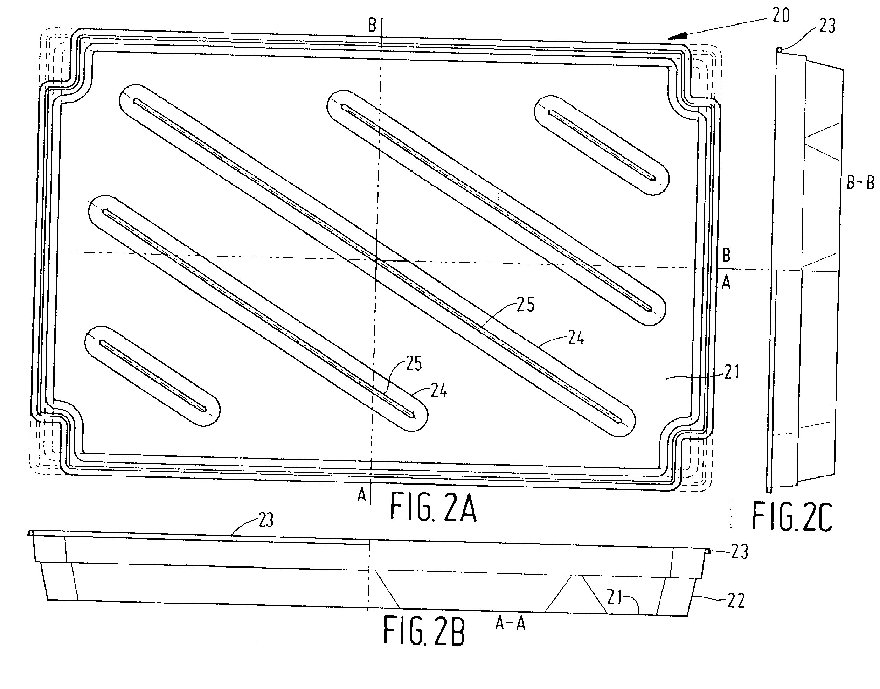

Figures 2A, 2B and 2C show in top plan view and side view, respectively, a water reservoir 20 according to the invention, which comprises a bottom plate 21 and an edge 22 extending upwards along the entire circumference of bottom plate 21. On a side remote from bottom plate 21, edge 22 includes a flange 23 which extends substantially along the entire circumference of bottom plate. Water reservoir 20 furthermore includes a number of parallel ribs 24, which each have a bearing surface 25 that is located at the crest of corrugation 24. Ribs 24 extend at an angle of 32° to the longitudinal side 26 of the water reservoir, as a result of which ribs 24 include an angle with the rows 3 and columns 4 of the support to be connected to water reservoir 20. The openings 5 that are present in support 1 are arranged along lines that extend at an angle of 45° to the longitudinal side of support 1. Ribs 24 must include an angle deviating from 45° with longitudinal side 26 upon being connected to such a support 1.

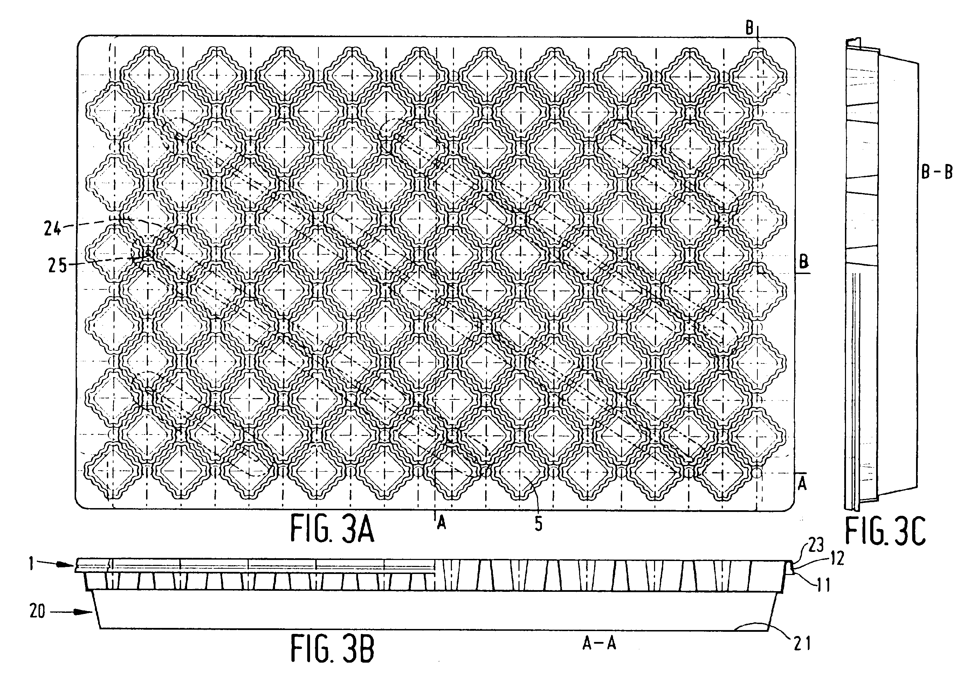

Figures 3A, 3B and 3C are a top plan view and side views, respectively, of a support 1, which is connected to the water reservoir 20. To this end the flanges 11 present along the circumference of support 1 have been positioned round the flanges 23 of support 20, whereby corrugation 12 has been snapped under the underside of flange 23. Reservoir 20 is filled with water, after which bulbous plants can be placed into openings 5. The ribbed walls 6, 7 thereby ensure that the bulbous plant is properly clamped down. The bulbs are in contact with the water in the reservoir via water passages 10'.

Under the influence of light and of nutrients that are present in the water, the bulbous plants will start to grow until the plants have reached a desired length or size. Now the plants are pulled out of openings 5 together with the bulbs that are present in openings 5. Owing to the fact that the support 1 is connected to the water reservoir 20 substantially along the entire circumference, the support will not be pulled up thereby, not even when only a few bulbous plants remain in support 1.

During the time that the bulbs are being forced, support 1 is supported on the ribs that are present in water reservoir 20, so that the spacing between openings 5 and the bottom 21 of the water reservoir is substantially the same for all openings.

After the bulbs have been removed from openings 5, the flanges can be bent in a direction away from upright edge 20 by hand, as a result of which corrugation 12 will be disconnected from flange 23 and support 1 can be lifted from the water reservoir 20. Then the support 1 and the water reservoir 20 can be cleaned, after which they can be used again. It is also possible to subsequently connect support 20 to another support which includes the same flanges 11 and corrugations 12 along its circumference, but which is provided with openings 5 whose dimension is adapted to other bulbous plants to be placed into openings 5, such as tulips, irises, narcissi, crocuses and onions.

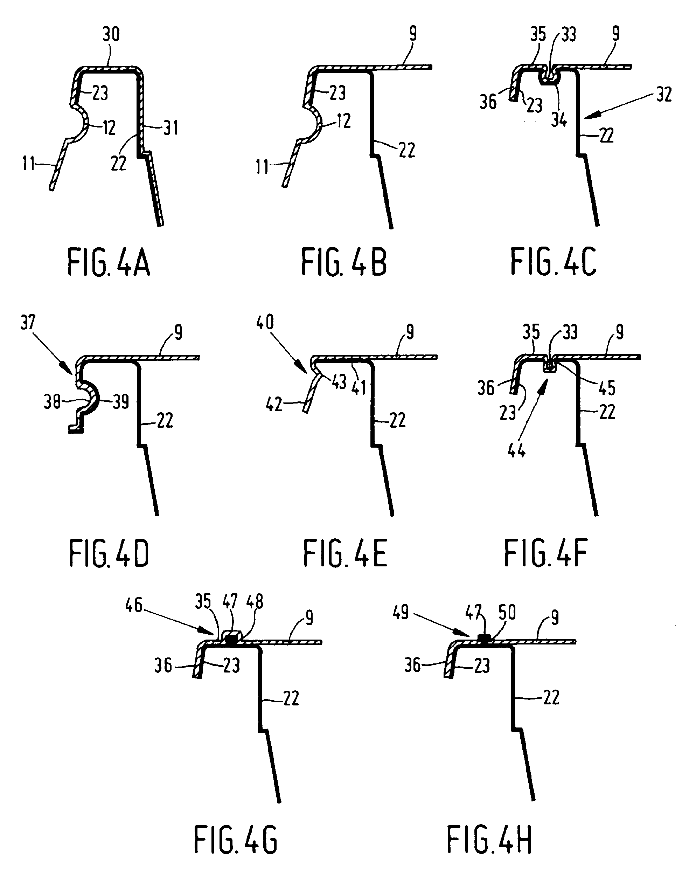

Figures 4A-H show various embodiments of snap connections between support 1 and water reservoir 20.

In Figure 4A the support comprises a wall portion 30 adjoining flange 11, which is connected, on a side remote from flange 11, to a wall portion 31 that abuts against the wall 22 on a side remote from flange 11 in the position in which the support is connected to the water reservoir.

Figure 4B is a larger-scale view of the connection between support 1 and water reservoir 20 that is shown in Figure 3B.

With the snap connection 32 that is shown in Figure 4C, a U-shaped indentation 33 is present in the upper side 9 of the support, which indentation is clampingly received in a U-shaped indentation 34 in a wall 35 that adjoins the upright wall 22 of the water reservoir. The support furthermore includes a downwardly extending wall portion 36, which is positioned on a side of flange 23 remote from wall portion 22 in the position in which a support is connected to a water reservoir.

Figure 4D shows an embodiment of a snap connection 37 wherein both the support and the water reservoir include a downwardly extending wall portion 38, 39, respectively, which wall portions exhibit different curvatures, wherein the wall portion 38 of the support abuts against wall portion 39 on a side remote from wall portion 22 in the position in which the support is connected to the water reservoir.

Figure 4E shows another embodiment of a snap connection 40 according to the invention, wherein the wall portion 22 of the water reservoir is connected to a substantially horizontally extending wall portion 41, whilst the upper side 9 of the support includes a downwardly extending flange 42 substantially along the entire circumference, which flange is provided with a V-shaped indentation which engages round one end of horizontal wall portion 41.

The embodiment of a snap connection 44 according to the invention that is shown in Figure 4F is different from the snap connection 32 that is shown in Figure 4C in that wall portion 35 of the water reservoir is not provided with a U-shaped indentation 34, but with slots 45, into which strip-shaped indentations 33 of the support can be clampingly received.

In the embodiment of a snap connection 46 that is shown in Figure 4G, wall portion 35 of the water reservoir includes an upright edge 47, around which a U-shaped edge 48 of the support clampingly engages.

In the embodiment of the snap connection 49 (Figure 4H), support 1 is provided with slot-like openings 50, through which the upright edge 47 of the water reservoir extends.

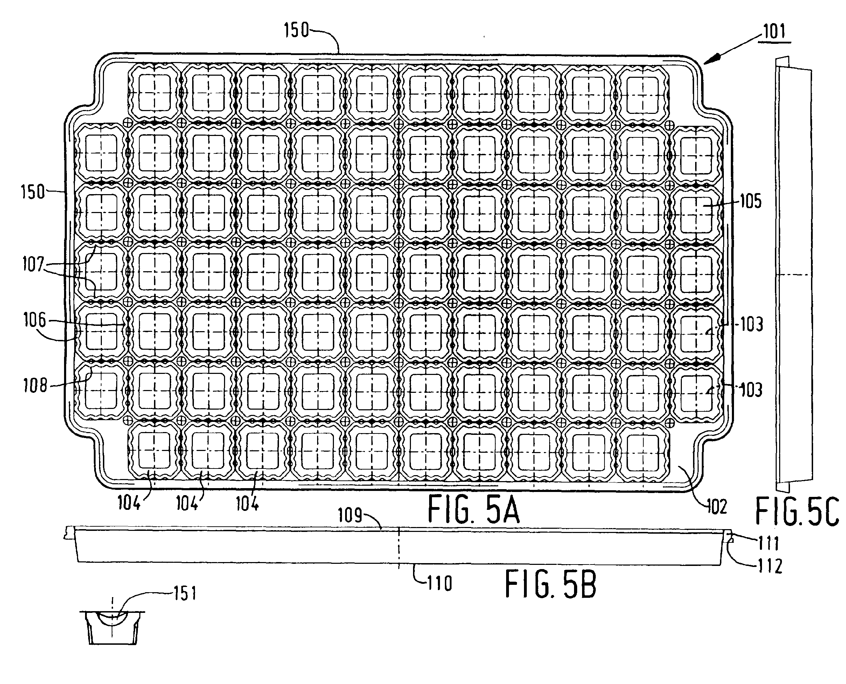

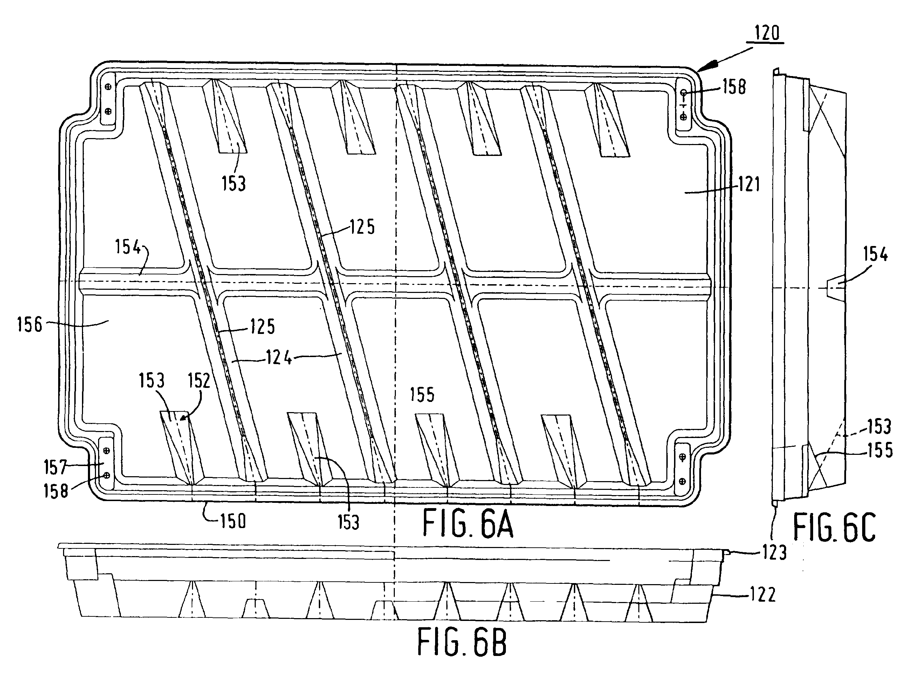

Figures 5A-5C, 6A-6C and 7A-7C show another embodiment of a reservoir and a support of a system according to the invention. In these figures, parts that correspond to those shown in Figures 1A-3C are indicated by the same numerals, albeit with an increment of 100.

Only the differences between the embodiment of the assembly according to the invention as shown Figures 5A-7C and the embodiment as shown in Figures 1A-3C will be discussed herein.

As is apparent from the top plan view of Figure 5A, the walls 106, 107 of openings 105 extend parallel to the outside walls 150 of support 101. Walls 106 are slightly longer than walls 107, so that a slightly rectangular opening 105 is obtained.

In addition, walls 106 and 107 are provided with a crescent-shaped notch 151 near the upper side 109, as a result of which the stiffness in the horizontal plane of support 101 is significantly enhanced. The bulb, which is frequently slightly oval, seen in sectional view, is placed into opening 105 with its long side parallel to the relatively long wall 106, after which the bulb is turned a quarter turn, whereby the bulb is clamped down between the walls 106. The clamping down of a bulb in an opening in this manner forms the subject matter of another patent application of the applicant, and consequently it will not be explained in more detail herein.

Reservoir 120 is different from reservoir 20 in that it includes, besides ribs 123, relatively short, low ribs 152 having sloping surfaces 153. Reservoir 120 furthermore includes a centrally positioned, relatively low rib 154, which extends parallel to the longitudinal side 150 of reservoir 120. The ribs 124, which extend at an angle, have bevelled wall portions 155 near longitudinal side 150. Ribs 124, 152 and 154 divide the reservoir 120 into a number of compartments 156 that are separated from each other by said ribs. Since separate compartments are provided, water that is present in reservoir 120 will remain in said separate compartments rather than attempt to flow to one side of the reservoir 120 when the reservoir 120 is being moved. The various ribs function as breakwaters, therefore. Since the ribs are bevelled near longitudinal side 150, water can flow from one compartment to another when the water level is relatively high, however. Outflow platforms 157 are present near the corners of reservoir 120, in which outflow platforms 157 outlet openings 158 are present. If desired, water can be admitted into the reservoir 120 via openings 158 on one side, whilst the water can flow out of reservoir 120 via the openings 158 located near the other side. As a result, a good through-flow of the water is obtained. The water level to be realised in reservoir 120 can be determined in a simple manner by adapting the position of the outflow platform 157 with respect to the underside of reservoir 120 in the injection mould.

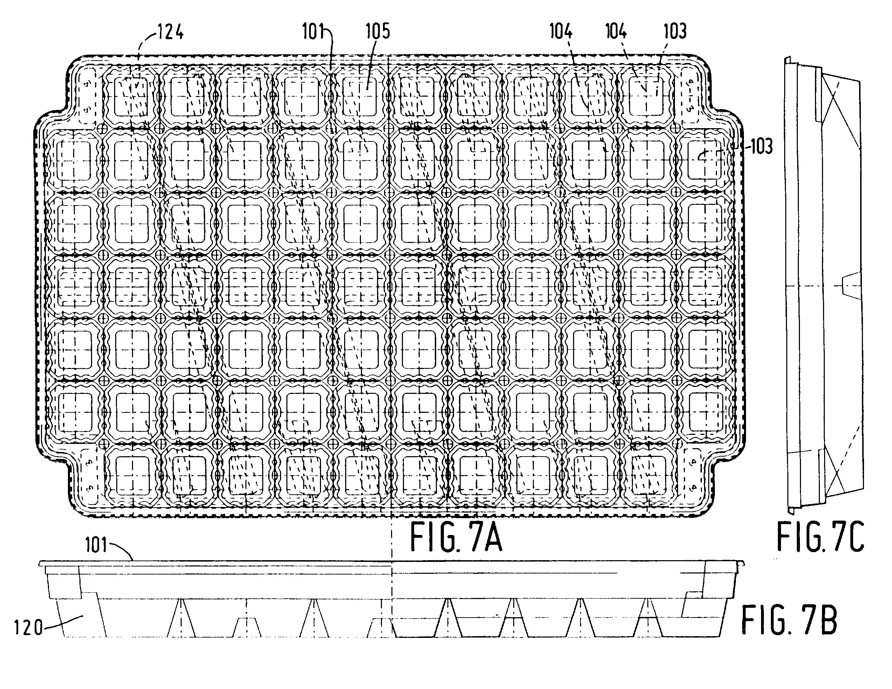

As is clearly shown in Figure 7A, the support 101 that is positioned on ribs 124 is supported by said ribs. Since said ribs 124 extend at an angle with respect to the longitudinal side 150, an effective support is realised for said support 101, whilst almost no openings 105 in the support are closed off.

The support and the reservoir, which are connected by means of a snap connection, form a stiff and strong, transportable and stackable system. They make it possible to plant bulbs during periods when there is less work at the nursery, and subsequently store said bulbs in a cold and dry environment. Water is added when the growing process is to be started.

Openings 105 are provided with square passages near the bottom. Said square passages enable diagonal deformation of the walls 106, 107, which makes it easier to place bulbs in openings 105.

It is also possible to use a reservoir which is capable of accommodating a plurality of supports 20, 120. Such a reservoir must include clamping means in which a number of such supports can be clamped down in a simple manner.

It is also possible to make the support and/or the reservoir of other materials, such as laminated foils, cardboard, polystyrene, etc.

It is possible to form overflow holes in the side walls of the reservoir, so that new water, in which nutrients are present, can flow into the reservoir, for example by means of a hose, whilst the water that is present in the reservoir can exit the reservoir via said overflow holes.

It is also possible to place another growth medium, such as earth, rock wool etc. in the reservoir.

## Claims

1. A system comprising a plate-shaped support for bulbous plants that can be positioned in a reservoir, which support is provided with a number of openings arranged in rows and columns, whilst the reservoir includes a number of ribs supporting said plate-shaped support, characterized in that said ribs extend at an acute angle to said rows and columns.

2. A system according to claim 1, characterized in that the support can be detachably connected to the reservoir by means of a snap connection.

3. A system according to claim 1 or 2, characterized in that the support can be connected to the reservoir substantially along its entire circumference.

4. A system comprising a plate-shaped support for bulbous plants that can be positioned in a reservoir, which support is provided with a number of openings arranged in rows and columns, characterized in that the support can be detachably connected to the reservoir by means of a snap connection.

5. A system according to claim 4, characterized in that the support can be connected to the reservoir substantially along its entire circumference.

6. A system according to any one of the preceding claims, characterized in that said openings are substantially rectangular.

7. A system according to any one of the preceding claims, characterized in that said openings are substantially square.

8. A system according to any one of the preceding claims, characterized in that said support and/or said reservoir are made of plastic material.
